# EUROPEAN PATENT APPLICATION

(11) **EP 2 676 828 A1**
(43) Date of publication of application: **25.12.2013**
(21) Application number: 12746644.9
(22) Date of filing: 30.01.2012
(51) Int. Cl.: B60K 7/00, H02G 1/14

(54) **IN-WHEEL MOTOR DRIVING APPARATUS**

(30) Priority: 18.02.2011 JP 2011033870
(71) Applicant: NTN Corporation, Osaka-shi, Osaka 550-0003 (JP)
(72) Inventor: AKAMATSU Yoshinobu, Iwata-shi, Shizuoka 438-0037 (JP); YAMAMOTO Tetsuya, Iwata-shi, Shizuoka 438-037 (JP)
(74) Representative: Grünecker, Kinkeldey, Stockmair & Schwanhäusser
(86) International application number: PCT/JP2012/051915
(87) International publication number: WO 2012/111412

(57) **Abstract**

An object of the present invention is to remove adverse effects on an in-wheel motor driving apparatus due to the existence of moisture in the apparatus. There is provided an in-wheel motor driving apparatus in which a driving apparatus for generating driving force of a wheel having a wheel hub bearing section is provided in the wheel, the in-wheel motor driving apparatus, wherein a portion of the driving apparatus, except the wheel hub bearing section, is housed in a case 22 having a sealed structure and thereby the inside of the driving apparatus is blocked from outside air, and air in the case 22 is replaced with inert gas as required. As a result, dew condensation is prevented in the case 22, and adverse effects due to the existence of moisture in the case 22 are removed.

## Description

### Technical Field

The invention relates to an in-wheel motor driving apparatus.

### Background Art

A conventional in-wheel motor driving apparatus 101 is disclosed in, for example, Japanese Patent Laid-Open No. 2005-324722 (Patent Literature 1).

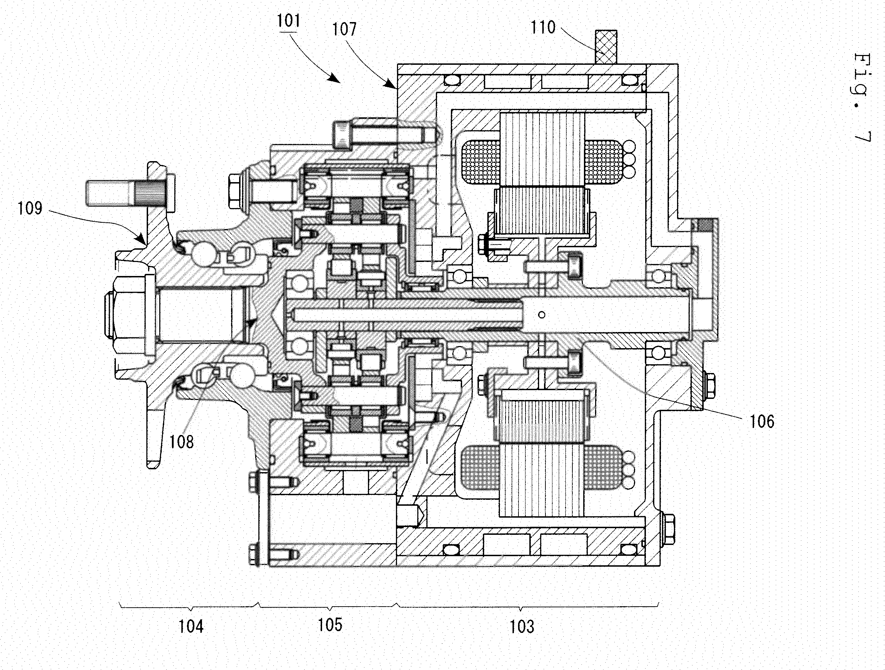

The in-wheel motor driving apparatus 101 shown in Fig. 7 includes a motor section 103 which rotationally drives a motor-side rotation member 106, a speed reduction section 105 which reduces the rotational speed of the motor-side rotation member 106 and transmits the rotation to a wheel-side rotation member 108, and a wheel hub bearing section 104 having a wheel hub 109 which is fixedly connected to the wheel-side rotation member 108.

In the motor section 103 of the in-wheel motor driving apparatus 101 configured as described above, a breather apparatus 110 is installed in order to maintain a constant pressure in the in-wheel motor driving apparatus 101.

### Citation List

### Patent Literature

Patent Literature 1: Japanese Patent Laid-Open No. 2005-324722

### Summary of Invention

### Technical Problem

Meanwhile, the breather apparatus 110 is installed at a case 107 of the motor section 103 and hence may be damaged by a flying stone, and the like.

The breather apparatus 110 is ventilation means between the inside of the in-wheel motor driving apparatus 101 and the outside. Therefore, when the breather apparatus 110 is damaged, water may enter the inside of the in-wheel motor driving apparatus 101 from the breather apparatus 110, so as to cause a short-circuit in the motor section 103, or so as to form rust in a member configuring the speed reduction section 105.

Further, when moisture exists in the in-wheel motor driving apparatus 101, the moisture may condense in the apparatus to cause water to accumulate in the apparatus.

When water accumulates in the in-wheel motor driving apparatus 101, the lubrication performance of the circulating lubricating oil may be deteriorated, so as to cause, in the long run, a failure of a gear tooth surface and a bearing section which configure the speed reduction section 105.

Accordingly, an object of the present invention is to remove the adverse effects due to the existence of moisture in the in-wheel motor driving apparatus.

### Solution to Problem

In order to solve the above-described problems, the present invention is characterized by an in-wheel motor driving apparatus in which a driving apparatus for generating driving force of a wheel having a wheel hub bearing section is provided in the wheel, wherein a portion of the driving apparatus, except the wheel hub bearing section, is housed in a case having a sealed structure.

When the case covering the driving apparatus is configured as the sealed structure in this way, the inside of the driving apparatus is blocked from outside air, and hence dew condensation in the case can be prevented, so that adverse effects due to the existence of moisture in the case can be removed.

It is more preferred to replace air in the case with inert gas.

As the inert gas, it is possible to use nitrogen gas and argon gas.

When the case is composed of a case main body and a lid member, the case can be configured as a sealed structure by arranging a sealing member between the case main body and the lid member.

As the sealing member, it is possible to use one or both of a gasket, such as an O-ring, and a liquid gasket.

As the driving apparatus, it is possible to use a driving apparatus including a motor section which rotationally drives a motor-side rotation member, a speed reduction section which reduces the rotational speed of the motor-side rotation member and transmits the rotation to a wheel-side rotation member, and a wheel hub bearing section which has a wheel hub fixedly connected to the wheel-side rotation member. In this case, the inside of the driving apparatus is configured as a sealed structure by arranging a sealing member between the wheel hub bearing section, and the case covering the motor section and the speed reduction section.

Further, since the inside of the wheel hub bearing section is configured as a sealed structure, lubricating oil can be shared among insides of the wheel hub bearing section, the motor section, and the speed reduction section.

The power supply cable of the stator of the motor section needs to be connected to an external inverter. Therefore, in order to prevent outside air from entering through the power supply cable, it is preferred to provide a terminal block hermetically fixed to the case, and dispose the distal end of the power supply cable from the stator on the outside of the case via the terminal block in such a manner that outside air is prevented from entering the case.

Further, it is also possible to provide the terminal block in a sealed terminal box provided on the outer surface of the case of the motor section, connect the wiring cable connected to the inverter to the terminal block in the terminal box, and applying a coating between the core wire and the sheath of the wiring cable in such a manner that moisture is prevented from entering the inverter.

### Advantageous Effects of Invention

As described above, according to the present invention, the case covering the driving apparatus is configured as the sealed structure, and thereby the inside of the driving apparatus is blocked from outside air, as a result of which dew condensation in the case can be prevented, and adverse effects due to the existence of moisture in the case can be removed.

### Brief Description of Drawings

Fig. 1 is a schematic sectional view of an in-wheel motor driving apparatus according to an embodiment of the present invention.
Fig. 2 is a schematic sectional view of an in-wheel motor driving apparatus according to an embodiment of the present invention.
Fig. 3 is a partial detailed view showing an example of drawing a power supply cable.
Fig. 4 is a schematic plan view of an electric vehicle provided which includes the in-wheel motor driving apparatus.
Fig. 5 is a rear view of the electric vehicle in Fig. 4.
Fig. 6 is a schematic longitudinal sectional view of the speed reduction section of the embodiment shown in Fig. 1.
Fig. 7 is a schematic sectional view of a conventional in-wheel motor driving apparatus.

### Description of Embodiments

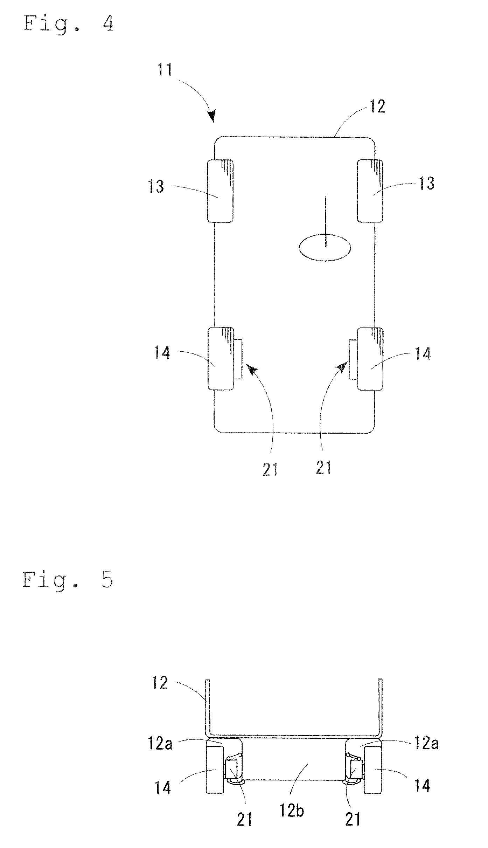

Hereinafter, embodiments of the present invention will be described based on the attached drawings.
As shown in Fig. 4, an electric vehicle 11 provided with an in-wheel motor driving apparatus according to an embodiment of the present invention includes a chassis 12, front wheels 13 as steering wheels, rear wheels 14 as driving wheels, and in-wheel motor driving apparatuses 21 which transmit driving force to the right and left rear wheels 14, respectively. As shown in Fig. 5, the rear wheels 14 are housed in wheel housings 12a of the chassis 12, and are fixed to a lower portion of the chassis 12 via a suspension system (suspension) 12b.

The suspension 12b includes suspension arms extending rightward and leftward therefrom to support the rear wheels 14, and struts including coil springs and shock absorbers to reduce vibration of the chassis 12 by absorbing vibrations that the rear wheels 14 receive from the ground. Further, the left and right suspension arms have stabilizers at their joints to reduce the vehicle body's inclination during turning. Note that it is desirable that the suspension 12b is an independent suspension system capable of moving the left and right wheels upward and downward separately to improve ground following capability and to efficiently transmit driving force of the driving wheels to the road surface even if the road surface has some irregularities.

Since the in-wheel motor driving apparatuses 21 provided in the electric vehicle 11 respectively drive the left and right rear wheels 14 and are mounted inside the wheel housings 12a, the electric vehicle 11 does not need to have the motor, drive shafts, differential gear mechanism and other components on the chassis 12. Therefore, the electric vehicle 11 has advantages that a sufficient passenger room can be secured and that the rotation of the left and right driving wheels can be individually controlled.

On the other hand, for further improvement of driving stability of the electric vehicle 11, unsprung weight needs to be reduced. Further, the size and weight of the in-wheel motor driving apparatus 21 need to be further reduced to provide a still larger passenger room.

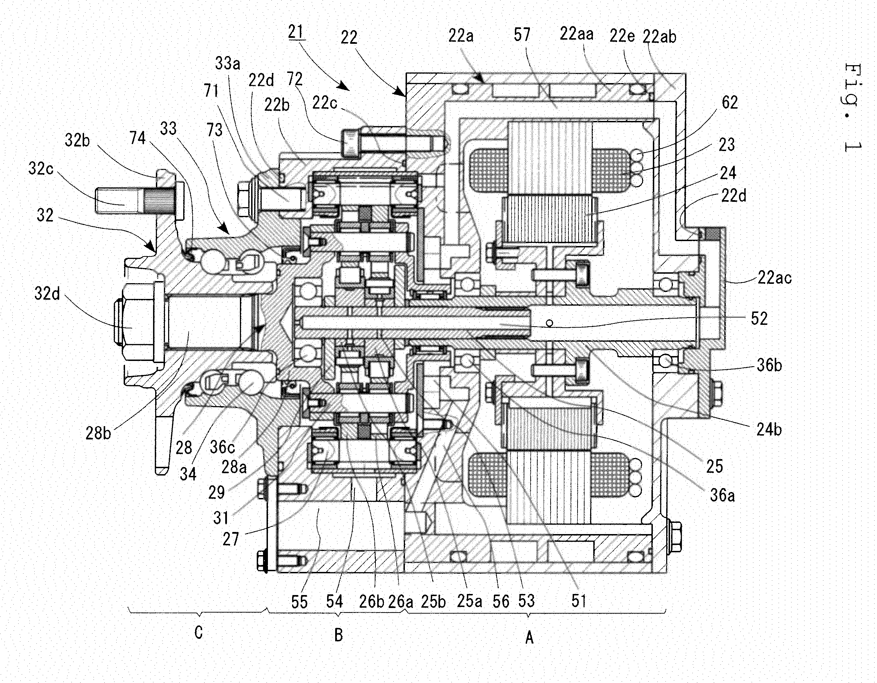

As shown in Fig. 1, the in-wheel motor driving apparatus 21 includes a motor section A which generates driving force; a speed reduction section B which reduces the rotational speed of the motor section A and outputs the rotating force; and a wheel hub bearing section C which transmits the output from the speed reduction section B to the driving wheel 14. The motor section A and the speed reduction section B are housed in a sealed case 22. As shown in Fig. 5, the in-wheel motor driving apparatus 21 is attached inside the wheel housing 12a of the electric vehicle 11.

Unlike the conventional case, the case 22 is not provided with the breather apparatus, and is formed to have a sealed structure so that the inside of the case 22 is blocked from outside air to prevent dew condensation in the case 22. The air in the case 22 may be replaced with inert gas, such as nitrogen gas and argon gas.

In order to seal the inside of the case 22, an O-ring 22c is provided between the case 22a of the motor section A and the case 22b of the speed reduction section B to provide sealing therebetween.

Further, an O-ring 22d is also provided on the outer side end surface of the case 22b of the speed reduction section B, on which end surface a fixing flange 33a of the wheel hub bearing section C is mounted. Thereby, the airtightness between the case 22b of the speed reduction section B and the wheel hub bearing section C is also maintained.

The case 22a of the motor section is composed of a case main body 22aa covering the outer peripheral surface of the motor section A, and a lid member 22ab. An O-ring 22e is also provided between the case main body 22aa and the lid member 22ab to provide sealing therebetween.

Further, the central portion of the lid member 22ab is composed of a lid member 22ac which is separated from the lid member 22ab. An O-ring 22d is also provided between the lid member 22ab and the separate lid member 22ac to provide sealing therebetween.

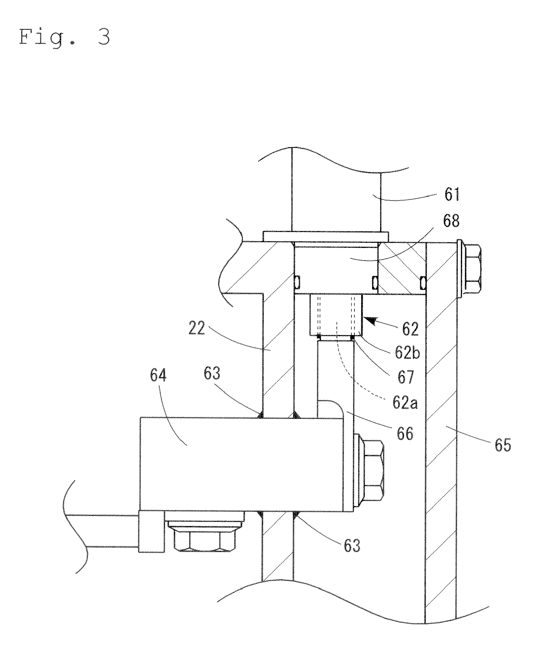

A stator 23 of the motor section A is connected to a wiring 61 of an external inverter by a power supply cable 62. However, it is desirable to adopt a wiring structure as shown in Fig. 3, in order to prevent moisture from entering the case 22a of the motor section A through a gap between a core wire 62a and a sheath 62b of the power supply cable 62.

In the wiring structure shown in Fig. 3, a terminal block 64 is hermetically fixed to the case 22a with a sealing material 63, and the distal end of the power supply cable 62 from the stator 23 is drawn to the outside of the case 22a via the terminal block 64 in such a manner that outside air is prevented from entering the case 22a through the gap between the core wire 62a and the sheath 62b of the power supply cable 62 disposed outside the case 22a.

Further, the terminal block 64 is drawn into a terminal box 65 having a sealed structure and provided on the outer surface of the case 22a of the motor section A, a terminal 66 of the power supply cable 62 connected to the inverter is connected to the terminal block 64 in the terminal box 65, and a coating 67 is applied to fill the gap between the core wire 62a and the sheath 62b of the power supply cable in such a manner that moisture is prevented from entering the inverter.

The wiring from the terminal box 65 to the outside is provided via a connector 68 having a sealed structure.

The motor section A is a radial gap motor including the stator 23 fixed to the case 22a of the motor section A, a rotor 24 disposed so as to face the inner side of the stator 23 with a radial gap therebetween, and a motor-side rotation member 24b fixedly connected to the inner side of the rotor 24 to rotate together with the rotor 24. The motor-side rotation member 24b is supported by roller bearings 36a and 36b rotatably with respect to the case 22a of the motor section A.

The motor-side rotation member 24b is disposed across the motor section A and the speed reduction section B to transmit the driving force of the motor section A to the speed reduction section B. The motor-side rotation member 24b has a hollow structure into which an input shaft 25 of the speed reduction section B is fitted and fixed. The two eccentric sections 25a and 25b are disposed at a 180-degree phase difference so that their centrifugal forces due to their eccentric movement are cancelled each other.

The speed reduction section B includes curved plates 26a and 26b which serve as revolution members and which are rotatably held by the eccentric sections 25a and 25b; a plurality of outer pins 27 which are held at fixed locations on the speed reduction section housing 22b and serving as outer circumferential engager for engagement with the outer circumferential portion of the cycloid discs 26a and 26b; a motion conversion mechanism which transmits the rotational movement of the curved plates 26a and 26b to a wheel-side rotation member 28; and counterweights 29 disposed adjacently to the eccentric sections 25a and 25b. Further, the speed reduction section B is provided with a speed reduction section lubrication mechanism which supplies lubricating oil to the speed reduction section B.

The wheel-side rotation member 28 includes a flange section 28a and a shaft section 28b. The flange section 28a has its end surface formed with holes at an equidistant interval on a circle centering on a rotational center of the wheel-side rotation member 28, for fixing the inner pins 31. Further, the shaft section 28b is fitted and fixed to a hub ring 32 so as to transmit the output of the speed reduction section B to the wheel 14. The flange section 28a of the wheel-side rotation member 28 and the input shaft 25 are rotatably supported by roller bearings 36c.

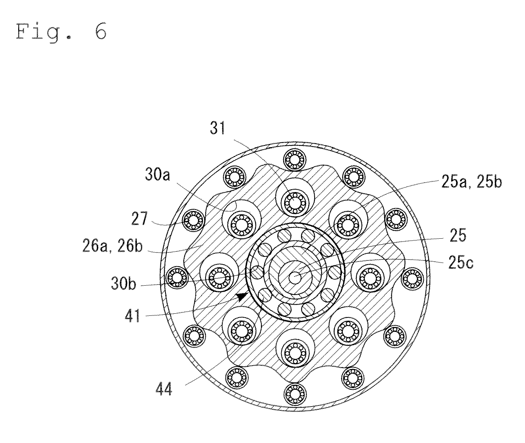

As shown in Fig. 6 each of the curved plates 26a and 26b has, along the outer peripheral portion thereof, a plurality of waveforms in the form of trochoid curves, such as epitrochoid curves, and has a plurality of through holes 30a penetrating from one end surface to the other end surface. The through holes 30a are made equidistantly on a circle centering on the rotational center of the cycloid discs 26a and 26b, and accommodate inner pins 31 which will be described later. Further, a through hole 30b is formed at the center of the curved plates 26a and 26b, so as to be fitted with the eccentric sections 25a and 25b.

The curved plates 26a and 26b are supported by a roller bearing 41 rotatably with respect to the eccentric sections 25a and 25b. The roller bearing 41 is a cylindrical roller bearing including an inner ring member which fits the outer diameter surface of each of the eccentric sections 25a and 25b, on the outer diameter surface of which an inside raceway surface is formed, an outside raceway surface which is directly formed on the inner diameter surface of the through hole 30b of each of the curved plates 26a and 26b, a plurality of cylindrical rollers 44 disposed between the inside raceway surface and the outside raceway surface, and a retainer (not shown) which retains the interval between the adjacent cylindrical rollers 44.

The outer pins 27 are equidistantly provided along a circumferential track centered about the rotational axis of the input shaft 25. When the curved plates 26a and 26b make orbital motion, the curved waveforms engage with the outer pins 27 to cause the curved plates 26a and 26b to make axial rotation. Here, the outer pin 27 is rotatably supported by a needle roller bearing with respect to the speed reduction section housing 22b. Thereby, the contact resistance between the outer pins 27 and the curved plates 26a and 26b can be reduced.

The counter weights 29 are disks each having an off-center through hole in which the input shaft 25 fits, and are disposed adjacently to the eccentric sections 25a and 25b respectively, at a 180-degree phase difference therefrom in order to cancel unbalanced inertia couple caused by the rotation of the cycloid discs 26a and 26b.

The motion conversion mechanism includes the plurality of inner pins 31 held by the wheel-side rotation member 28, and the through holes 30a formed in the curved plates 26a and 26b. The inner pins 31 are equidistantly provided on a circumferential track about the rotational axis of the wheel-side rotation member 28, and one axial direction end portion thereof is fixed to the wheel-side rotation member 28. In addition, in order to reduce frictional resistance with the curved plates 26a and 26b, needle roller bearings are provided at places of contact with the inner wall surface of the through holes 30a of the curved plates 26a and 26b.

The through holes 30a are provided at positions respectively corresponding to the plurality of inner pins 31. In addition, the inner diameter of the through holes 30a is set so as to be larger by a predetermined size than the outer diameter of the inner pins 31 (the outer diameter indicating "the maximum outer diameter including the needle roller bearing", and the same is applied hereinafter).

The speed reduction section lubrication mechanism is configured to supply lubricating oil to the speed reduction section B, and includes a lubricating oil passage 52, a lubricating oil supply port 53, a lubricating oil discharge port 54, a lubricating oil reservoir 55, a rotary pump 51, and a circulation oil passage 56.

The lubricating oil passage 52 axially extends inside the input shaft 25. Further, the lubricating oil supply port 53 is provided at the eccentric sections 25a and 25b.

The lubricating oil discharge port 54 for discharging the lubricating oil in the speed reduction section B is provided at least one place of the case 22b at the position of the speed reduction section B. Further, the circulation oil passage 57 connecting the lubricating oil discharge port 54 to the lubricating oil passage 52 is provided in the case 22a of the motor section A. The lubricating oil discharged from the lubricating oil discharge port 54 is refluxed to the lubricating oil passage 52 via the circulation oil passage 57.

The wheel-hub bearing section C includes the hub ring 32 which is fixedly connected to the wheel-side rotation member 28 and to which the wheel 14 is attached, and a fixed ring 33 which holds the hub ring 32 rotatably with respect to the case 22b of the speed reduction section B. The hub ring 32 includes a cylindrical hollow section 32a and a flange section 32b. The flange section 32b is fixedly connected to the wheel 14 with bolts 32c. A spline and a male screw are formed on the outer diameter surface of the shaft section 28b of the wheel-side rotation member 28. Further, a spline hole is formed on the inner diameter surface of the hollow section 32a of the hub ring 32. The wheel-side rotation member 28 is screwed to the inner diameter surface of the hub ring 32, and the distal end of the wheel-side rotation member 28 is then secured with a nut 32d to fasten the hub ring 32 and the wheel-side rotation member 28 to each other.

The hub ring 32 has a wheel fitting flange section 32b integrally formed on the outer surface of the hollow section 32a thereof. An outer raceway surface is integrally formed on the vehicle-outer-side outer diameter surface of the hollow section 32a. An inner ring 32e having an inner raceway surface on the outer surface thereof is fitted to the vehicle-inner-side outer diameter surface of the hollow section 32a.

The fixed ring 33 has, on the inner peripheral surface thereof, an outer raceway surface and an inner raceway surface respectively facing the outer raceway surface and the inner raceway surface of the hub ring 32, and has the fixing flange 33a on the outer peripheral surface thereof.

The hub ring 32 and the fixing ring 33 are opposed to each other with their respective outer raceway surfaces and inner raceway surfaces, and a plurality of rows of balls 34 are placed between these two surfaces.

The fixing flange 33a of the fixed ring 33 and the case 22b of the speed reduction section B are fastened to each other with bolts 71. Further, the case 22b of the speed reduction section B and the case 22a of the motor section A are fastened to each other with bolts 72.

In the embodiment shown in Fig. 1, an outer sealing member 74 and an inner sealing member 73 are respectively provided at the vehicle outer and inner sides of the space between the hub ring 32 and the fixed ring 33, in which space the plurality of rows of balls 34 are accommodated. The space between the hub ring 32 and the fixed ring 33 is sealed by the outer sealing member 74 and the inner sealing member 73, and grease for the balls 34 is filled in this sealed space.

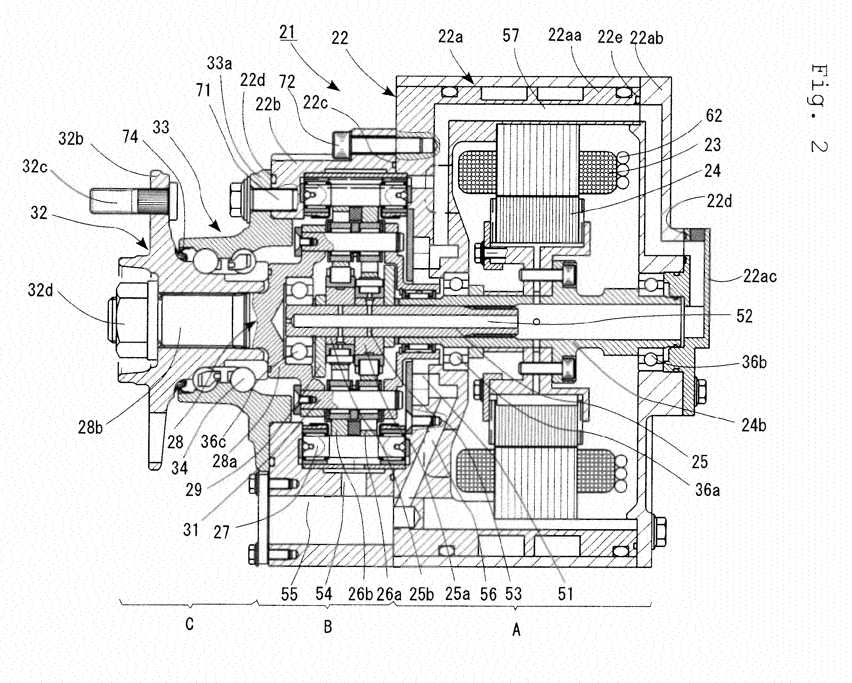

In an embodiment shown in Fig. 2, only the outer sealing member 74 is disposed, and the inner sealing member 73 is omitted. Thereby, the lubricating oil of the speed reduction section B is supplied between the hub ring 32 and the fixed ring 33, so that the lubricating oil of the speed reduction section B is used for lubrication of the wheel hub bearing section C.

Note that, in the present invention, the inside of the apparatus is sealed, but it is desirable that the amount of the lubricating oil filled in the inside of the apparatus is half or less of the inner volume of the apparatus.

In the following, the operation principle of the in-wheel motor driving apparatus 21 will be described. In the motor section A, the rotor 24 composed of a permanent magnet or a magnetic body is rotated under the action of the electromagnetic force generated, for example, by supplying AC current to the coil of the stator 23. When the input shaft 25 connected to the rotor 24 is rotated by the rotation of the rotor 24, the curved plates 26a and 26b perform orbital motion about the rotational axis of the input shaft 25. At this time, the outer pins 27 engage with the curved waveforms of the curved plates 26a and 26b, to make the curved plates 26a and 26b rotate in the direction opposite to the rotation of the motor-side rotation member 25.

The inner pins 31 inserted into the through holes 30a are brought into contact with the inner wall surfaces of the through holes 30a according to the rotational movement of the curved plates 26a and 26b. Thereby, the orbital motion of the curved plates 26a and 26b is not transmitted to the inner pins 31, and only the rotational movement of the curved plates 26a and 26b is transmitted to the wheel hub bearing section C via the wheel-side rotation member 28.

At this time, the rotation of the input shaft 25 is reduced by the speed reduction section B and transmitted to the wheel-side rotation member 28. Therefore, even when a motor section A of a low torque and high rotational speed type is adopted, necessary torque can be transmitted to the driving wheel 14.

Note that the reduction ratio of the speed reduction section B configured as described above is calculated by (ZA - ZB)/ ZB, where ZA represents the number of the outer pins 27 and ZB represents the number of the waveforms of the curved plates 26a, 26b. In the embodiment shown in Fig. 1 where ZA = 12 and ZB = 11, the reduction ratio results in 1/11, which is a considerably high reduction ratio.

In this way, when such speed reduction section B, which is capable of obtaining a high reduction ratio without multi-stage configuration, is adopted, it is possible to provide a compact in-wheel motor driving apparatus 21 with a high reduction ratio. Further, needle roller bearings are provided for the outer pins 27 and the inner pins 31, and thereby the frictional resistance of the outer pins 27 and the inner pins 31 with respect to the curved plates 26a and 26b is reduced, so that the transmission efficiency of the speed reduction section B is improved.

The unsprung weight can be suppressed by adopting the in-wheel motor driving apparatus 21 according to the above-described embodiments for the electric vehicle 11. As a result, it is possible to obtain the electric vehicle 11 excellent in driving stability.

Further, the above-described embodiments show examples in which the lubricating oil supply port 53 is provided at the eccentric sections 25a and 25b, but the present invention is not limited to this. The lubricating oil supply port 53 can be provided at an arbitrary position of the input shaft 25. However, from a viewpoint of stably supplying lubricating oil to the roller bearings 41, it is desirable to provide the lubricating oil supply port 53 at the eccentric sections 25a and 25b.

Further, in the above-described embodiments, the two curved plates 26a and 26b of the speed reduction section B are provided to be 180 degrees out of phase with each other. However, the number of the curved plates can be arbitrarily set, and for example, when three curved plates are provided, the curved plates may be disposed to be 120 degrees out of phase with each other.

Further, the above-described embodiments show an example of the motion conversion mechanism, which is composed of the inner pins 31 fixed to the wheel-side rotation member 28, and the through holes 30a provided in the curved plates 26a and 26b, but the present invention is not limited to this. As the motion conversion mechanism, it is possible to adopt an arbitrary form capable of transmitting the rotation of the speed reduction section B to the wheel hub 32. For example, the motion conversion mechanism may be composed of inner pins fixed to the curved plates, and holes formed in the wheel-side rotation member.

Note that the operation in the above-mentioned embodiments is described in view of the rotation of each of the members, but actually, power including torque is transmitted to the driving wheel from the motor section A. Therefore, the power reduced as described above is converted into power of high torque.

Further, in the description of the operation in the above-described embodiments, electric power is supplied to the motor section A to drive the motor section A, and the power from the motor section A is transmitted to the driving wheel 14. On the contrary, for example, in such a case where the vehicle decelerates or goes down a slope, power from the driving wheel 14 side may be converted to high-speed low-torque rotation by the speed reduction section B, so as to be transmitted to the motor section A for electric power generation. Further, the electric power generated by the motor section A may be stored in a battery so as to be used afterwards for driving the motor section A and may also be used for operating other electric apparatuses provided in the vehicle.

Further, each of the above-described embodiments shows an example in which a radial gap motor is adopted in the motor section A, but the present invention is not limited to this. A motor having any configuration can be applied. For example, the motor may be an axial gap motor which is provided with a stator fixed to a housing, and a rotor disposed on the inner side of the stator so as to face the stator with an axial gap.

Further, each of the above-described embodiments shows an example of the in-wheel motor driving apparatus 21 in which the cycloid speed reduction mechanism is adopted in the speed reduction section B, but the present invention is not limited to this. Any speed reduction mechanism can be adopted. For example, a planetary gear speed reduction mechanism, a parallel shaft gear speed reduction mechanism, and the like, can be adopted. Further, the present invention can also be applied to an in-wheel motor unit (motor direct drive) without speed reducer.

Further, the electric vehicle 11 shown in Fig. 4 is an example in which the rear wheels 14 are used as the driving wheels, but the present invention is not limited to this. The present invention may be applied for a vehicle in which the front wheels 13 are used as the driving wheels, or may be applied for a four-wheel drive vehicle. Note that it should be understood that, in this specification, "electric vehicle" is a concept including all the automobiles which obtain driving force from electric power, and includes, for example, hybrid car, and the like.

Thus far, embodiments of the present invention have been described with reference to the drawings. However, the present invention is not limited to these illustrated embodiments. Any of these embodiments illustrated thus far may be modified or changed in many ways within the scope or within the equivalence of the present invention.

### Reference Signs List

- 21: In-wheel motor driving apparatus
- A: Motor section
- B: Speed reduction section
- C: Wheel hub bearing section
- 22: Case
- 22a: Case
- 22aa: Case main body
- 22ab: Lid member
- 22ac: Lid member
- 22b: Case
- 22c: O-ring
- 22d: O-ring
- 22e: O-ring
- 32: Hub ring
- 33: Fixed ring
- 62: Power supply cable
- 62a: Core wire
- 62b: Sheath
- 63: Sealing material
- 64: Terminal block
- 65: Terminal box
- 66: Sealing member
- 67: Coating
- 68: Connector

## Claims

1. An in-wheel motor driving apparatus in which a driving apparatus for generating driving force of a wheel having a wheel hub bearing section is provided in the wheel, wherein a portion of the driving apparatus, except the wheel hub bearing section, is housed in a case having a sealed structure.

2. The in-wheel motor driving apparatus according to claim 1, wherein air in the case is replaced with inert gas.

3. The in-wheel motor driving apparatus according to claim 1 or claim 2, wherein the case is composed of a case main body and a lid member, and a sealing member is disposed between the case main body and the lid member.

4. The in-wheel motor driving apparatus according to claim 3, wherein the sealing member is formed of at least one of a gasket and a liquid gasket.

5. The in-wheel motor driving apparatus according to any of claims 1 to 4, wherein the driving apparatus includes: a motor section which rotationally drives a motor-side rotation member; a speed reduction section which reduces the rotational speed of the motor-side rotation member and transmits the rotation to a wheel-side rotation member; and a wheel hub bearing section which has a wheel hub fixedly connected to the wheel-side rotation member.

6. The in-wheel motor driving apparatus according to claim 5, wherein a sealing member is disposed between the wheel hub bearing section and the case covering the motor section and the speed reduction section.

7. The in-wheel motor driving apparatus according to claim 5, wherein an inside of the wheel hub bearing section is configured as a sealed structure, and lubricating oil is shared among insides of the wheel hub bearing section, the motor section, and the speed reduction section.

8. The in-wheel motor driving apparatus according to any of claims 1 to 7, wherein in the case of the motor section, a terminal block hermetically fixed to the case is provided, and a distal end of a power supply cable from a stator is drawn to the outside of the case via the terminal block.

9. The in-wheel motor driving apparatus according to claim 8, wherein the terminal block is provided in a sealed terminal box provided on the outer surface of the case of the motor section, a wiring cable connected to an inverter is connected to the terminal block in the terminal box, and a coating is applied between the core wire and the sheath of the wiring cable in such a manner that moisture is prevented from entering the inverter.
